(19) **Europäisches Patentamt / European Patent Office / Office européen des brevets**

(11) **EP 2 991 141 A1**

(12) **EUROPEAN PATENT APPLICATION**
published in accordance with Art. 153(4) EPC

(43) Date of publication:
**02.03.2016 Bulletin 2016/09**

(51) Int Cl.:
*H01M 4/48* (2006.01)   *C01B 33/113* (2006.01)
*H01M 4/131* (2010.01)   *H01M 4/36* (2006.01)

(21) Application number: **14811501.7**

(22) Date of filing: **01.05.2014**

(86) International application number:
**PCT/JP2014/002388**

(87) International publication number:
**WO 2014/199554 (18.12.2014 Gazette 2014/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.06.2013   JP 2013125276**

(71) Applicant: **Shin-Etsu Chemical Co., Ltd.**
**Tokyo 100-0004 (JP)**

(72) Inventors:
• **YOSHIKAWA, Hiroki**
  **Annaka-shi**
  **Gunma 379-0224 (JP)**
• **KAMO, Hiromichi**
  **Annaka-shi**
  **Gunma 379-0224 (JP)**

(74) Representative: **Wibbelmann, Jobst**
**Wuesthoff & Wuesthoff**
**Patentanwälte PartG mbB**
**Schweigerstrasse 2**
**81541 München (DE)**

(54) **SILICON-CONTAINING MATERIAL, NON-AQUEOUS ELECTROLYTE SECONDARY BATTERY NEGATIVE ELECTRODE AND METHOD FOR MANUFACTURING SAME, AND NON-AQUEOUS ELECTROLYTE SECONDARY BATTERY AND METHOD FOR MANUFACTURING SAME**

(57)     The present invention provides a silicon-contained material capable of being doped with lithium and de-doped, wherein when a three-electrode cell produced by using a working electrode including the silicon-contained material as an active material, a reference electrode made of metallic lithium, a counter electrode made of metallic lithium, and an electrolyte having lithium ionic conductivity is charged and discharged to graph a relationship between a derivative dQ/dV of a charging or discharging capacity Q with respect to an electric potential V of the working electrode on the basis of the reference electrode and the electric potential V, a ratio B/A is 2 or less while current flows in a direction in which the lithium of the silicon-contained material is de-doped in the discharge, where A is the maximum value of the derivative dQ/dV with respect to a potential range from 260 mV to 320 mV, and B is the maximum value of the derivative dQ/dV with respect to a potential range from 420 mV to 520 mV. This silicon-contained material enables production of a secondary battery having high cycle performance. The invention also provides a negative electrode and a non-aqueous electrolyte secondary battery that use this silicon-contained material and a method of producing these.

FIG. 1

## Description

TECHNICAL FIELD

The present invention relates to a silicon-contained material, a negative electrode for use in a non-aqueous electrolyte secondary battery, a method of producing the negative electrode, a non-aqueous electrolyte secondary battery, and a method of producing the battery.

BACKGROUND ART

As mobile devices such as mobile electronic devices and mobile communication devices have highly developed, secondary batteries with higher energy density are recently needed to improve efficiency and reduce the size and weight of the devices. The capacity of the secondary batteries of this type can be improved by known methods: use of a negative electrode material made of an oxide of V, Si, B, Zr or Sn, or a complex oxide thereof (See Patent Literatures 1 and 2, for example); use of a negative electrode material made of a metallic oxide subjected to melting and rapid cooling (See Patent Literature 3, for example); use of a negative electrode material made of a silicon oxide (See Patent Literature 4 for example); use of a negative electrode material made of $Si_2N_2O$ and $Ge_2N_2O$ (See Patent Literature 5 for example), and others.

Although these conventional methods increase the charging and discharging capacities and energy density to some extent, the increase is insufficient for market needs and the cycle performance fails to fulfill the needs. The conventional methods need to further improve the energy density and thus are not entirely satisfactory. In particular, Patent Literature 4 discloses use of a silicon oxide as a negative electrode material for a lithium-ion secondary battery so as to obtain an electrode with a high capacity. This method, however, cannot achieve low irreversible capacity at the first charge and discharge and a practical level of cycle performance; thus, there is room for improvement in this method. As disclosed in Patent Literatures 6 and 7, improvements in first efficiency and cycle performance have been brought about. Secondary batteries, however, are required to have a lifetime of 10 years or more when used for electric vehicles, and accordingly have an important problem of an improvement in their cycle performance.

CITATION LIST

PATENT LITERATURE

Patent Literature 1:Japanese Unexamined Patent publication (Kokai) No. H05-174818
Patent Literature 2:Japanese Unexamined Patent publication (Kokai) No. H06-60867
Patent Literature 3:Japanese Unexamined Patent publication (Kokai) No. H10-294112
Patent Literature 4:Japanese Patent No. 2997741
Patent Literature 5:Japanese Unexamined Patent publication (Kokai) No. H11-102705
Patent Literature 6:Japanese Patent No. 3952180
Patent Literature 7:Japanese Patent No. 4081676

SUMMARY OF INVENTION

TECHNICAL PROBLEM

The present invention was accomplished in view of the above-described circumstances. It is an object of the present invention to provide a silicon-contained material that enables production of a secondary battery having high cycle performance. It is another object of the present invention to provide a negative electrode and a non-aqueous electrolyte secondary battery that use the silicon-contained material, and a method of producing these.

SOLUTION TO PROBLEM

To solve the above problems, the present invention provides a silicon-contained material capable of being doped with lithium and de-doped, wherein when a three-electrode cell produced by using a working electrode including the silicon-contained material as an active material, a reference electrode made of metallic lithium, a counter electrode made of metallic lithium, and an electrolyte having lithium ionic conductivity is charged and discharged to graph a relationship between a derivative dQ/dV of a charging or discharging capacity Q with respect to an electric potential V of the working electrode on the basis of the reference electrode and the electric potential V, a ratio B/A is 2 or less while current flows in a direction in which the lithium of the silicon-contained material is de-doped in the discharge, where A is the maximum value of the derivative dQ/dV with respect to a potential range from 260 mV to 320 mV, and B is the maximum value of the derivative dQ/dV with respect to a potential range from 420 mV to 520 mV.

The silicon-contained material whose the above defined ratio B/A is 2 or less provides good cycle performance when used as an active material of a negative electrode of a non-aqueous electrolyte secondary battery.

The silicon-contained material is preferably a silicon composite configured such that silicon fine crystals or silicon fine particles are dispersed in a substance having a different composition from a composition of the silicon fine crystals or the silicon fine particles.

The silicon composite is preferably a silicon oxide expressed by a general formula of $SiO_x$ (where $0.9 \leq x < 1.6$).

The substance having the different composition from the composition of the silicon fine crystals or the silicon fine particles is preferably a silicon-based compound.

In this case, the silicon-based compound is preferably silicon dioxide.

The silicon-contained material of this type allows a non-aqueous electrolyte secondary battery to have an increased capacity and improved cycle performance when used as a negative electrode of the non-aqueous electrolyte secondary battery.

The silicon-contained material preferably includes a conductive coating.

In this case, the conductive coating is preferably mainly made of carbon.

The silicon-contained material coated with the conductive coating can improve an ability to collect current.

The silicon-contained material preferably contains lithium.

The silicon-contained material containing lithium can reduce a first irreversible capacity and improve a first efficiency.

The invention also provides a negative electrode for use in a non-aqueous electrolyte secondary battery, including a silicon-contained material according to the invention used as a negative electrode active material.

The invention also provides a negative electrode for use in a non-aqueous electrolyte secondary battery, including a silicon-contained material according to the invention and carbon used as a negative electrode active material.

The negative electrode of this type has good cycle performance and is hence preferable.

The invention also provides a non-aqueous electrolyte secondary battery, including a negative electrode and a positive electrode that are capable of occluding and emitting lithium ions and an electrolyte having lithium ionic conductivity, wherein the negative electrode is a negative electrode for use in a non-aqueous electrolyte secondary battery according to the invention.

The non-aqueous electrolyte secondary battery of this type has good cycle performance and is hence preferable.

The invention also provides a method of producing a negative electrode for use in a non-aqueous electrolyte secondary battery by using a silicon-contained material capable of being doped with lithium and de-doped as a negative electrode active material, comprising: selecting the silicon-contained material such that when a three-electrode cell produced by using a working electrode including the silicon-contained material as an active material, a reference electrode made of metallic lithium, a counter electrode made of metallic lithium, and an electrolyte having lithium ionic conductivity is charged and discharged to graph a relationship between a derivative dQ/dV of a charging or discharging capacity Q with respect to an electric potential V of the working electrode on the basis of the reference electrode and the electric potential V, a ratio B/A is 2 or less while current flows in a direction in which the lithium of the silicon-contained material is de-doped in the discharge, where A is the maximum value of the derivative dQ/dV with respect to a potential range from 260 mV to 320 mV, and B is the maximum value of the derivative dQ/dV with respect to a potential range from 420 mV to 520 mV; and producing the negative electrode for use in a non-aqueous electrolyte secondary battery by using the selected silicon-contained material as the negative electrode active material.

This negative electrode producing method, which includes using the silicon-contained material selected such that the ratio B/A is 2 or less, can obtain a negative electrode for use in a non-aqueous electrolyte secondary battery having good cycle performance.

The invention also provides a method of producing a non-aqueous electrolyte secondary battery including a negative electrode and a positive electrode that are capable of occluding and emitting lithium ions and an electrolyte having lithium ionic conductivity, wherein the negative electrode is a negative electrode produced by the method according to the invention.

This producing method can obtain a non-aqueous electrolyte secondary battery having good cycle performance.

ADVANTAGEOUS EFFECTS OF INVENTION

The inventive silicon-contained material can provide good cycle performance when used as an active material of a negative electrode of a non-aqueous electrolyte secondary battery. The inventive method of producing a negative electrode can obtain a negative electrode for use in a non-aqueous electrolyte secondary battery having good cycle performance.

BRIEF DESCRIPTION OF DRAWINGS

FIG. 1 is a diagram showing a relationship between dQ/dV and an electric potential of a working electrode with respect to metallic Li of an evaluation lithium-ion secondary battery using a silicon-contained material in example 1 upon discharging when a discharge current density is 0.3 mA/cm$^2$;

FIG. 2 is a diagram showing an example of a dQ/dV curve of a mixture of 95% of graphite and 5% of the silicon-contained material in example 1;

FIG. 3 is a diagram showing an example of a dQ/dV curve of a mixture of 95% of graphite and 5% of the silicon-contained material in comparative example 1;

FIG. 4 is a graph showing a typical relationship between charge and discharge cycles and a discharging capacity maintenance rate;

FIG. 5 is a graph showing relationships between an intensity ratio B/A of dQ/dV and a capacity maintenance rate in the 20-th cycle in examples 1 to 3 and comparative examples 1 to 3;

FIG. 6 is a graph showing comparison between the intensity ratio B/A of dQ/dV and an initial capacity reduction ratio in examples 1 to 3; and

FIG. 7 is a schematic diagram of a reactor that can be used in production of a silicon-contained material.

DESCRIPTION OF EMBODIMENTS

Presently, it is very important to develop a material for an electrode having large charging and discharging capacities. The research to develop the material is carried out at various places. In such circumstances, silicon and a silicon oxide (SiO$_x$) attract considerable attention as a negative electrode active material for use in a lithium-ion secondary battery, because of its large capacity. A silicon oxide (SiO$_x$) is particularly attractive because the silicon oxide is easier to form fine silicon particles in silicon dioxide than does metallic silicon powder and thereby facilitates improvements in various performances such as the cycle performance due to the fine silicon particles. However, silicon-contained materials that can provide excellent cycle performance allowing for application to a vehicle have not yet been analyzed in an electrochemical manner; a definite procedure for developing these materials has not been established.

The present inventors analyzed the cause of reduction in cycle performance after a lithium-ion secondary battery using silicon and silicon oxide (SiO$_x$) as a negative electrode active material is charged and discharged multiple times, and consequently found the following. In this analysis, a three-electrode cell produced by using a working electrode including a silicon-contained material capable of being doped with lithium and de-doped as an active material, a reference electrode made of metallic lithium, a counter electrode made of metallic lithium, and an electrolyte having lithium ionic conductivity was used. This cell was charged and discharged. A relationship between a derivative dQ/dV of a charging or discharging capacity Q with respect to an electric potential V of the working electrode and the electric potential V was graphed. This electric potential V is obtained on the basis of the reference electrode. The inventors consequently found the following. To improve the cycle performance, attention should be paid to a ratio B/A, where A is the maximum value of the derivative dQ/dV with respect to a potential range from 260 mV to 320 mV, and B is the maximum value of the derivative dQ/dV with respect to a potential range from 420 mV to 520 mV upon discharging during which current flows in the direction in which the lithium of the silicon-contained material is de-doped. The inventors thereby brought the invention to completion.

The invention will hereinafter be described in detail, but not limited thereto.

It is to be noted that the symbol "%" described below represents mass%.

The invention relates to a silicon-contained material, a negative electrode for use in a non-aqueous electrolyte secondary battery, a method of producing the negative electrode, a non-aqueous electrolyte secondary battery, and a method of producing the battery. This silicon-contained material is expected because this material, when used as a negative electrode active material for a lithium-ion secondary battery, exhibits charging and discharging capacities several times as large as a graphite-based material that is mainly used at present. The invention provides a method for improving a capacity maintenance rate when charge and discharge are repeated, which can be referred to as the cycle performance.

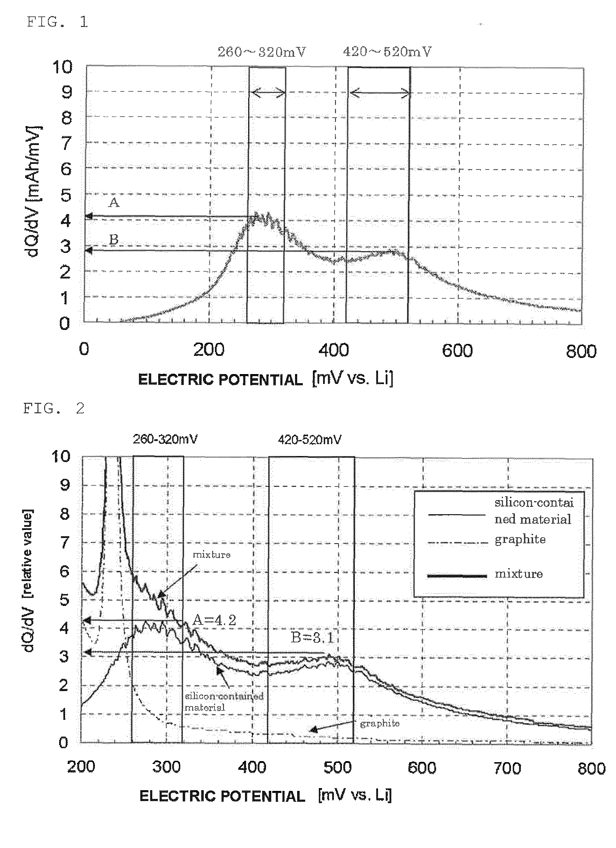

A silicon-contained material according to the invention is capable of being doped with lithium and de-doped and exhibits a ratio B/A of 2 or less. A method of measuring this ratio B/A will be described. A three-electrode cell is first produced by using a working electrode including the silicon-contained material as an active material, a reference electrode made of metallic lithium, a counter electrode made of metallic lithium, and an electrolyte having lithium ionic conductivity, and charged and discharged. A relationship between a derivative dQ/dV of a charging or discharging capacity Q with respect to an electric potential V of the working electrode measured on the basis of the reference electrode and the electric potential V is then graphed. The ratio B/A is finally obtained by calculating the maximum value A of the derivative dQ/dV with respect to a potential range from 260 mV to 320 mV and the maximum value B of the derivative dQ/dV with respect to a potential range from 420 mV to 520 mV, when current flows in the direction in which the lithium of the silicon-contained material is de-doped upon discharging. This ratio B/A is preferably 1.6 or less, more preferably 1.2 or less. When the ratio B/A is more than 2, in contrast, sufficient cycle performance cannot be obtained. FIG. 1 is a graph showing a relationship between dQ/dV and the electric potential of the working electrode with respect to metallic Li when an evaluation lithium-ion secondary battery using the silicon-contained material in the later-described example 1 is discharged. The definition of A and B is shown in FIG. 1 as the values of A and B. As shown in the figure, the maximum value of A and B is the maximum value of dQ/dV within each section.

In this case, the discharge is preferably carried out under conditions of a current density ranging from 0.1 to 0.4 mA/cm$^2$ and a constant current. When the current density is 0.4 mA/cm$^2$ or less, a dendrite of metallic lithium is hard to occur. When the current density is 0.1 mA/cm$^2$ or more, this condition enables the evaluation assuming a practical battery. Thus, these conditions are preferable. For the same reason, when the discharge conditions are determined by a C discharge rate, a value ranging from 0.015 to 0.05 is preferable.

The value of B/A can be presumed, even for a mixture of a silicon-contained material and a different charge and discharge material from the silicon-contained material such as graphite powder. A discharge curve (a dQ/dV curve) obtained for this mixture is the sum of a discharge curve (a dQ/dV curve) of the silicon-contained material and a discharge curve (a dQ/dV curve) of the different charge and discharge material. When the different charge and discharge material from the silicon-contained material is carbon such as graphite, however, the value B/A can be estimated in a manner that A is regarded as the dQ/dV value of the mixture at 320 mV and B is regarded as the maximum value within respect to the range from 420 to 520 mV because the value dQ/dV around 320 mV is comparatively small. It is to be noted that the value of B/A can be revaluated by using an accurate dQ/dV curve of a newly produced electrode by mainly using a silicon-contained material. It is particularly preferable that when the measured ratio B/A of the dQ/dV value of the mixture is about 2, this value be re-measured.

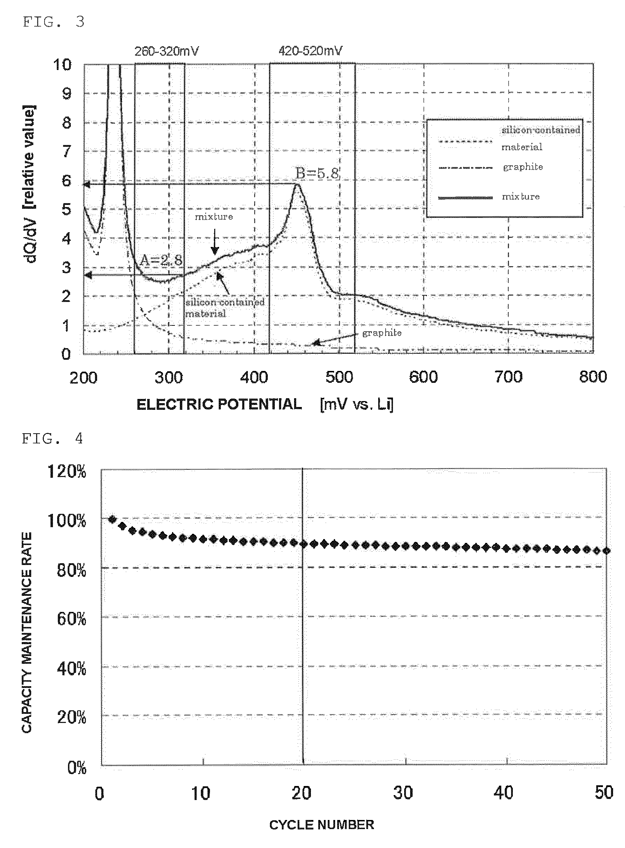

FIG. 2 shows an example of a dQ/dV curve of a mixture of 95% of graphite and 5% of the silicon-contained material in the later-described example 1, in which the value of A is 4.2, the value of B is 3.1, and the ratio B/A is 0.74. FIG. 3 shows an example of a dQ/dV curve of a mixture of 95% of graphite and 5% of the silicon-contained material in the later-described comparative example 1, in which the value of A is 2.8, the value of B is 5.8, and the ratio B/A is 2.1.

The silicon-contained material can be a silicon composite configured such that silicon fine crystals or silicon fine particles are dispersed in a substance having a different composition from a composition of the silicon fine crystals or the silicon fine particles.

The silicon composite can be a silicon oxide expressed by a general formula of $SiO_x$ (where $0.9 \leq x < 1.6$).

The substance having the different composition from the composition of the silicon fine crystals or the silicon fine particles can be a silicon-based compound. In this case, the silicon-based compound can be silicon dioxide.

If a silicon oxide is mainly used as the raw material of the silicon-contained material, then the amount of dispersed silicon fine particles in the silicon dioxide is preferably in the range from 2 to 36 mass%, more preferably in the range from 10 to 30 mass%. When this amount of dispersed silicon is 2 mass% or more, the charging and discharging capacities can be sufficiently increased; when this amount is 36 mass% or less, sufficient cycle performance can be maintained.

If metallic silicon is used as the raw material of the silicon-contained material, then the amount of dispersed silicon fine particles in the composite is preferably in the range from 10 to 95 mass%, particularly in the range from 20 to 90 mass%. When this dispersion amount is 10 mass% or more, an advantage of the metallic silicon raw material can be exploited; when this amount is 95 mass% or less, the status of the dispersed silicon particles can be readily maintained, and the cycle performance can be improved.

Use of this silicon-contained material for a negative electrode of a non-aqueous electrolyte secondary battery enables an increase in capacity and an improvement in cycle performance.

The average particle size of the silicon-contained material is preferably 0.01 μm or more, more preferably 0.1 μm or more, further preferably 0.2 μm or more, particularly preferably 0.3 μm or more. The upper limit of this average particle size is preferably 30 μm or less, more preferably 20 μm or less, further preferably 10 μm or less. When the average particle size is 0.01 μm or more, the bulk density is sufficiently large, and charging and discharging capacities per unit volume can be sufficiently increased. When the average particle size is 30 μm or less, an electrode film can be readily produced and inhibited from peeling from a current collector, so this size is preferable. It is to be noted that the average particle size is a value measured as mean cumulative mass $D_{50}$ (i.e., a particle size or a median diameter when a cumulative mass is 50%) in measurement of particle size distribution by a laser diffraction scattering.

The BET specific surface area of the inventive silicon-contained material is preferably 0.1 m$^2$/g or more, more preferably 0.2 m$^2$/g or more. The upper limit of this BET specific surface area is preferably 30 m$^2$/g or less, more preferably 20 m$^2$/g or less. When the BET specific surface area is 0.1 m$^2$/g or more, its surface activity can be sufficiently made large and the binding strength of a binder when an electrode is produced can be increased, resulting in an improvement in the cycle performance when charge and discharge are repeated. When the BET specific surface area is 30 m$^2$/g or less, the amount of a solvent to be absorbed when an electrode is produced is sufficiently small, and no large amount of binder is needed to maintain the binding strength, so this range is preferable. This leads to sufficient conductivity and enables an increase in the cycle performance. It is to be noted that these BET specific surface areas are values measured by a single point BET method using the amount of an N$_2$ gas to be absorbed.

The silicon-contained material can be coated with a conductive coating. In this case, the conductive coating is mainly made of carbon.

The coating made of a conductive substance on the surface of particles of the silicon-contained material achieves an improved structure to collect current. This coating prevents the creation of a particle that fails to contribute charge and discharge and allows a negative electrode material for use in a non-aqueous electrolyte secondary battery having a high coulombic efficiency at the initial stage of repetition of charging and discharging to be obtained. Examples of the conductive substance include metal and carbon. Although a common method of coating with the conductive substance is physical vapor deposition (PVD) or chemical vapor deposition (CVD), it is also acceptable to use electroplating or a method of forming carbon by carbonization of an organic substance.

The silicon-contained material preferably contains lithium. This silicon-contained material doped with lithium can reduce the first irreversible capacity and improve the first efficiency. Although the silicon-contained material can be directly doped with metallic lithium, it is desired to take a measure for improving safety: the silicon-contained material and metallic lithium are added to an organic solvent to disperse the metallic lithium. Alternatively, the silicon-contained material can be doped with lithium by mixing the silicon-contained material and a compound such as lithium hydride and lithium aluminum hydride and heating the resultant under an inert atmosphere. The amount of doped lithium preferably ranges from 5 to 30%.

A preferred embodiment of a secondary battery according to the invention is as follows.

(Negative electrode)

The inventive negative electrode for use in a non-aqueous electrolyte secondary battery uses the inventive silicon-contained material as a negative electrode active material. The inventive silicon-contained material and carbon can be used as this negative electrode active material.

When a negative electrode is produced by using a silicon-contained material as a main material of the negative electrode active material, a negative electrode mixture of 50 to 95% of the silicon-contained material, 0 to 50% of a conductive additive, and 1 to 30% of a binder is applied to a metallic foil that functions as a current collector, such as copper or stainless steel foil; the resultant is used as the negative electrode. When the negative electrode is produced by using, as the active material, a mixture of a silicon-contained material and a carbon-based negative electrode material such as graphite, a mixture of 1 to 50% of the silicon-contained material, 50 to 99% of the carbon-based negative electrode material such as graphite or hard carbon, and 1 to 30% of a binder is applied to a metallic foil that functions as a current collector, such as copper or stainless steel foil; the resultant can be used as the negative electrode.

In the formation of the negative electrode by using the silicon-contained material, a common method can be used in which a slurry obtained from a mixture of the material, an organic binder and a solvent is applied to copper or stainless steel foil that functions as the current collector and dried.

The type of the conductive additive that can add when the negative electrode is produced is not particularly limited, provided the conductive additive is a material having electron conductivity that neither decomposes nor transmutes in a battery produced with this material. Specific examples of the conductive additive include powder or fiber of metal such as Al, Ti, Fe, Ni, Cu, Zn, Ag, Sn, and Si, and graphite such as natural graphite, synthetic graphite, various types of coke powder, mesophase carbon, acetylene black, ketjenblack, carbon nanofiber (such as carbon nanotube), graphite, vapor-grown carbon fiber, pitch-based carbon fiber, polyacrylonitrile(PAN) based carbon fiber, and various types of sintered resin.

Various organic substances that are not dissolved nor decomposed in a battery such as polyimide, styrene-butadiene rubber (SBR), polyacrylic acid, and polyvinylidene fluoride can be used as the binder in the negative electrode.

Various additives such as a thickener can be added to the negative electrode as needed. The foil of the current collector can be subjected to a surface treatment such as a carbon coating process.

The negative electrode of this type has good cycle performance, so this is preferable.

(Positive electrode)

Examples of a positive electrode material that can be used as a positive electrode active material include a transition metal oxide such as lithium cobalt oxide (LiCoO$_2$), lithium nickel oxide (LiNiO$_2$), lithium manganese oxide (LiMn$_2$O$_4$), V$_2$O$_5$, MnO$_2$, TiS$_2$, and MoS$_2$, a chalcogen compound, a solid solution or mixture thereof, oxoacid metal lithium represented by phosphoric acid metal lithium.

A positive electrode mixture of this positive electrode active material, a conductive additive, and a binder is applied to metallic foil that functions as the current collector, such as aluminum or stainless steel foil; the resultant can be used as the positive electrode. The amount of the positive electrode active material preferably ranges from 50% to 99%.

Examples of the conductive additive in the positive electrode that can be used include conductive materials such as acetylene black, ketjenblack, carbon nanofiber, graphite, and a mixture thereof. The conductive additive is preferably added in a content of 0 to 50%.

The positive electrode preferably contains various organic substances, such as polyimide, styrene-butadiene rubber, polyacrylic acid, and polyvinylidene fluoride, in a content of 1 to 30% as the binder.

Various additives such as a thickener can be added to the positive electrode as needed. The foil of the current collector can be subjected to a surface treatment such as a carbon coating process.

(Electrolyte)

The electrolyte used is a non-aqueous electrolyte obtained by dissolving lithium salt such as lithium hexafluorophosphate, and lithium perchlorate in an organic solvent. Examples of the organic solvent (non-aqueous solvent) include propylene carbonate, ethylene carbonate, 1,2-dimethoxyethane, $\gamma$-butyrolactone, 2-methyltetrahydrofuran, and a combination thereof. In addition to these solutions, various solid electrolytes and other non-aqueous electrolytes may be used: for example, various types of ionic liquid containing lithium ion, a solid electrolyte having lithium ionic conductivity, a pseudo-solid electrolyte containing ionic liquid and fine powder.

(Separator)

When a liquid electrolyte is used, a separator is preferably disposed between the negative and positive electrodes. A preferred material of the separator is unsoluble in the electrolyte and can withstand an electric potential of the electrodes. Examples of this material include organic substances such as polyolefin and polyimide, and inorganic fiber such as glass. A porous film or nonwoven fabric is formed from such a material and used as a sheet that allows lithium ions to pass through. This sheet may be coated with inorganic substances to improve heat resistance and wettability as needed.

(Configuration of a battery)

The inventive battery is basically configured to have the positive electrode and negative electrode that uses the inventive silicon-contained material, and the electrolyte, and may include the separator disposed between the positive and negative electrodes as needed. When a solid or semisolid electrolyte is used, the electrolyte can be disposed between the positive and negative electrodes instead of the separator. The positive electrode, the separator or the solid or semisolid electrolyte, and the negative electrode may be used as a set, or plural sets. A set or sets of electrodes may be wound or folded. The negative electrode mixture and the positive electrode mixture can be formed on both surfaces of the foil body of the current collector so that a battery container is efficiently filled with the active materials. When the liquid electrolyte is used, the set of the electrodes interposing the separator therebetween can be housed in the battery container and the electrolyte can be poured therein to produce a battery. When the solid or semisolid electrolyte is used, the set of the electrodes interposing the electrolyte therebetween can be housed in the battery container to produce a battery. It is to be noted that well-known battery containers such as a coin type, square type, or laminate type container can be used.

A secondary battery according to the invention will now be descried, but the invention is not limited to this battery.

The inventive non-aqueous electrolyte secondary battery includes the negative and positive electrodes that are capable of occluding and emitting lithium ions and the electrolyte having lithium ionic conductivity. The above inventive negative electrode for use in a non-aqueous electrolyte secondary battery is used as this negative electrode.

This non-aqueous electrolyte secondary battery has good cycle performance, so this is preferable.

Methods of producing the silicon-contained material, the negative electrode, and the battery according to the invention will now be described, but the invention is not limited to these methods.

The inventive method of producing the negative electrode for use in a non-aqueous electrolyte secondary battery uses the silicon-contained material capable of being doped with lithium and de-doped as the negative electrode active material. This method includes a process of selecting the silicon-contained material exhibiting a ratio B/A of 2 or less, and a process of producing the negative electrode for use in a non-aqueous electrolyte secondary battery by using the selected silicon-contained material as the negative electrode active material. The procedure for selecting the material is as follows. A three-electrode cell is first produced by using a working electrode including the silicon-contained material as the active material, a reference electrode made of metallic lithium, a counter electrode made of metallic lithium, and an electrolyte having lithium ionic conductivity. This cell is then charged and discharged. A relationship between a derivative dQ/dV of a charging or discharging capacity Q with respect to an electric potential V of the working electrode measured on the basis of the reference electrode and the electric potential V is then graphed. The ratio B/A is finally calculated, where A is the maximum value of the derivative dQ/dV with respect to a potential range from 260 mV to 320 mV and B is the maximum value of the derivative dQ/dV with respect to a potential range from 420 mV to 520 mV upon discharging during which current flows in the direction in which the lithium of the silicon-contained material is de-doped. The silicon-contained material is selected depending on this ratio B/A.

This negative-electrode producing method, which uses the silicon-contained material selected exhibiting a ratio B/A of 2 or less, can obtain a negative-electrode for use in a non-aqueous electrolyte secondary battery having good cycle performance.

In the inventive method of producing the negative electrode for use in a non-aqueous electrolyte secondary battery, the ratio B/A is preferably 1.6 or less, more preferably 1.2 or less. By way of example of the silicon-contained material satisfying the above condition, silicon oxide expressed by a general formula of $SiO_x$ where $0.9 \leq x < 1.6$ will be described.

The inventive method of producing silicon oxide powder follows, for example, a reaction scheme described below. In the invention, an exemplary raw material can be a mixed powder of silicon dioxide powder and metallic silicon powder. It is particularly important to adjust the average particle size of the silicon dioxide powder to 0.1 $\mu$m or less and the average particle size of the metallic silicon powder to 30 $\mu$m or less.

$Si(s) + SiO_2(s) \rightarrow 2SiO(g)$; Collected after cooled and solidified.

The average particle size of the silicon dioxide powder used in the invention is preferably 0.1 $\mu$m or less, more preferably 0.01 to 0.1 $\mu$m, particularly preferably 0.01 to 0.08 $\mu$m. The average particle size of the metallic silicon powder used in the invention is preferably 30 $\mu$m or less, more preferably 0.05 to 30 $\mu$m, particularly preferably 0.1 to 20 $\mu$m. When the average particle size of the silicon dioxide powder is 0.1 $\mu$m or less and the average particle size of the metallic silicon powder is 30 $\mu$m or less, reactivity can be made sufficient. In addition, a reaction rate can be made sufficient without creating reaction residue, resulting in sufficient productivity. It is to be noted that this average particle size can be measured as mean cumulative mass $D_{50}$ or a median diameter in measurement of particle size distribution by a laser diffraction scattering.

In this case, the type of the silicon dioxide powder used is preferably, but not particularly limited to, fumed silica, in the viewpoint of cost. The metallic silicon powder is not particularly limited, and can be produced by pulverizing metallic silicon lumps to a prescribed size with a common pulverizer such as a ball mill, a jet mill, or a media agitating mill.

Both types of the powder are ideally mixed at the same mole according to the above expression. According to the consideration by the inventors, however, the reactivity is somewhat improved when the ratio of the metallic silicon is higher than the silicon dioxide. It can be assumed that this is affected by a native oxide film on the metallic silicon or a minute amount of oxygen in a reactor. Accordingly, the mole ratio of the metallic silicon powder to the silicon dioxide powder is preferably more than 1 and less than 1.1, more preferably in the range from 1.01 to 1.08. When this mole ratio of the metallic silicon powder to the silicon dioxide powder is 1 or more, the reaction can be perfectly caused without creating reaction residue of silicon dioxide. When this mole ratio of the metallic silicon powder to the silicon dioxide powder is 1.1 or less, the reaction can also be perfectly caused without creating reaction residue of the metallic silicon.

The conditions under which the silicon dioxide powder and the metallic silicon powder are mixed are not particularly limited. A mixer such as a ball mill or a mixer that shears at a high speed is preferably used to well mix the powder, because when the powder is well mixed, the reactivity is apt to increase. In some cases, water is added to the above mixture, so that contact efficiency can be increased due to adsorbing power. In this case, the mixture after water is added is dried, and the resultant is used as the raw material.

The mixture of the metallic silicon powder and the silicon dioxide powder, having the above physical property, is heated at temperatures from 1,100°C to 1,450°C under an inert gas or a reduced pressure to generate silicon monoxide gas. In this process, whether the reactivity is improved greatly depends on the atmosphere in a furnace, particularly the degree of vacuum; the atmosphere in the furnace is preferably under a reduced pressure. In this case, the degree of vacuum is preferably 80 Pa or less, particularly in the range from 1 to 50 Pa. This degree of vacuum enables the value of B/A of the obtained silicon oxide to satisfy the above definition, so this degree of vacuum is preferable. The reaction temperature preferably ranges from 1,100°C to 1, 450°C, particularly from 1, 300°C to 1,420°C. When the reaction temperature is 1,100°C or more, vapor pressure of the silicon monoxide gas can be made sufficient. The reactivity can also be made sufficient. The reaction thereby does not take a long time, resulting in sufficient efficiency. When the reaction temperature is 1,450°C or less, the reactivity can be made sufficient without milting the raw material of the metallic silicon powder.

The generated silicon monoxide gas is then precipitated on a base. This base for precipitation is not particularly limited by its material and shape. This material may be selected properly from the group of a metal such as stainless steel (SUS), copper, molybdenum and tungsten, ceramic such as graphite, alumina, mullite, silicon carbide, and silicon nitride, depending on the purpose or application; stainless steel is preferably used because of its strength and cost advantage.

Although the size and shape of a reaction chamber and a precipitation chamber are not particularly limited, a highly airtight apparatus is preferably used in which the degree of leak is 100 lusec or less because poor airtightness increases the amount of oxygen of the precipitates on the base. Note that 1 lusec corresponds to the degree of leak that causes pressure to increase by 1 $\mu$Hg per second in a 1-litter vacuum container; 1 lusec=1/760 atm·ml/sec≈1.32×10⁻³ atm·ml/sec. The precipitation method is not particularly limited; whether this method is carried out continuously or in a batch manner is properly selected.

A method of performing a heat treatment on the silicon oxide obtained in the above manner under an inert gas atmosphere or a reducing atmosphere will now be described, but the invention is not limited to this method.

The heat treatment in the silicon oxide is preferably performed at 1,100°C or less. When the temperature of this heat treatment is 1,100°C or less, the crystallite size of silicon can be prevented from increasing to 10 nm or more, and usage rate can be prevented from decreasing. The temperature of the heat treatment is more preferably 1,050°C or less, particularly preferably 1,000°C or less. It is to be noted that when the silicon oxide is obtained by cooling and precipitating the silicon monoxide gas produced by heating the mixture of silicon dioxide and metallic silicon, the temperature of the base plate often becomes 500°C or more. In other words, the silicon oxide is often obtained substantially by performing a heat treatment at temperatures of 500°C or more. The substantial lower limit of the heat treatment temperature can accordingly be regarded as being 500°C.

The time for this heat treatment on the silicon oxide can be adjusted properly within the range from 10 minutes to 20 hours, particularly within the range from 30 minutes to 12 hours, depending on the heat treatment temperature; for example, when the heat treatment temperature is 1,100°C, about 5 hours is preferable.

This heat treatment on the silicon oxide is not particularly limited, provided a reactor having a heater is used under an insert gas atmosphere. This heat treatment can be performed continuously or in a batch manner. More specifically, a fluidized bed reactor, a rotary furnace, a vertical moving bed reactor, a tunnel furnace, a batch furnace, a rotary kiln, and so on may be selected properly depending on the purpose. In this heat treatment, a gas that is inert at the above heat treatment temperature, such as Ar, He, H₂, or N₂, can be used singly or as a mixed gas.

A method of producing a conductive silicon-contained material by coating the silicon-contained material obtained in the above manner with a conductive coating will now be described. When silicon oxide powder is used as a raw material, this method can function as the above heat treatment. The silicon-contained material is not limited, provided the relationship of the ratio B/A≤2 holds true. The method of producing the conductive silicon-contained material is not particularly limited; an example of this method is to coat particles configured such that silicon fine particles are dispersed in a compound having a different composition from a composition of the silicon fine particles with carbon. In particular, the following methods I to IV are preferably used.

I) Silicon oxide powder expressed by a general formula of SiOₓ (where 0.9≤x<1.6) or silicon composite powder is used as a raw material. This silicon composite powder is obtained by adding silicon dioxide or alumina etc., to metallic silicon powder composed of silicon fine particles and strongly pulverizing and mixing the resultant. This silicon composite powder is configured such that the silicon fine crystals or particles are dispersed in a substance having a different composition from a composition of the silicon fine crystals or particles. This raw material is subjected to a heat treatment at temperatures ranging from 600 to 1,200°C, preferably from 700 to 1,150°C, more preferably from 700 to 1,000°C, further preferably from 700 to 900°C, under an atmosphere containing at least an organic gas and/or vapor. This heat treatment causes the silicon oxide powder of the raw material to disproportionate to a composite of silicon and silicon dioxide and vapor-deposits carbon on its surface.

II) Silicon oxide powder expressed by a general formula of SiOₓ (where 0.9≤x<1.6) or silicon composite powder is used as a raw material. This silicon composite powder is obtained by adding silicon dioxide or alumina etc., to metallic silicon powder composed of silicon fine particles and strongly pulverizing and mixing the resultant. This silicon composite powder is configured such that the silicon fine crystals or particles are dispersed in a substance having a different composition from a composition of the silicon fine crystals or particles. This silicon oxide powder or this silicon composite powder is previously heated at temperatures ranging from 600 to 1,200°C under an inert gas stream. The resultant is used as a raw material. This raw material is subjected to a heat treatment at temperatures ranging from 600 to 1,200°C, preferably from 700 to 1,150°C, more preferably from 700 to 1,000°C, under an atmosphere containing at least an organic gas and/or vapor. This heat treatment vapor-deposits carbon on its surface.

III) Silicon oxide powder expressed by a general formula of SiOₓ (where 0.9≤x<1.6) or silicon composite powder is used as a raw material. This silicon composite powder is obtained by adding silicon dioxide or alumina etc., to metallic silicon powder composed of silicon fine particles and strongly pulverizing and mixing the resultant. This silicon composite powder is configured such that the silicon fine crystals or particles are dispersed in a substance having a different composition from a composition of the silicon fine crystals or particles. This raw material is subjected to a heat treatment at temperatures ranging from 500 to 1,200°C, preferably from 500 to 1,000°C, more preferably from 500 to 900°C, under an atmosphere containing at least an organic gas and/or vapor. This heat treatment vapor-deposits carbon on its surface. A heat treatment is then performed at temperatures ranging from 600 to 1,200°C, preferably from 700 to 1,150°C, more preferably from 700 to 1,000°C, under an inert gas atmosphere.

IV) Silicon oxide powder expressed by a general formula of $SiO_x$ (where $0.9 \leq x < 1.6$) or silicon composite powder obtained by adding silicon dioxide or alumina etc., to metallic silicon powder composed of silicon fine particles and strongly pulverizing and mixing the resultant is prepared. This silicon composite powder is configured such that the silicon fine crystals or particles are dispersed in a substance having a different composition from a composition of the silicon fine crystals or particles. This silicon oxide powder or this silicon composite powder is mixed with a carbon source such as sucrose. The resultant is then subjected to carbonization at temperatures ranging from 500 to 1,200°C, preferably from 500 to 1,000°C, more preferably from 500 to 900°C, and used as a raw material. This raw material is subjected to a heat treatment at temperatures ranging from 600 to 1,200°C, preferably from 700 to 1,150°C, more preferably from 700 to 1,000°C, under an inert gas atmosphere.

In the above method I or II, if the vapor deposition (i.e., thermal CVD), which may be performed at temperatures ranging from 600 to 1,200°C (preferably from 700 to 1,150°C, more preferably from 700 to 1,000°C), is performed by a heat treatment at 600°C or more, a obtained carbide has sufficient conductivity. In addition to this, the conductivity hardly varies, and possibility of causing variance of the battery characteristics as a negative electrode material can thereby be sufficiently inhibited. When this heat treatment is performed at 1,200°C or less, the value of B/A can satisfy the above definition, and the cycle performance can be improved, so this temperature is preferable.

In the above method IV, when the temperature of the heat treatment for the carbonization is 500°C or more, the conductivity of the obtained carbide can be made sufficient. In addition to this, possibility of causing variance of the battery characteristics as a negative electrode material can be sufficiently inhibited. When this temperature is 1,200 or less, the value of B/A can satisfy the above definition, and the cycle performance can be improved, so this temperature is preferable.

In the above method III or IV, since the heat treatment on the silicon composite powder is performed at temperatures ranging from 600 to 1,200°C, particularly from 700 to 1,000°C after the carbon coating process, the silicon composite powder and the conductive carbon coating in which the carbon atoms are aligned (crystallized) can be finally combined on the surface even when the carbon coating process is performed at temperatures of less than 600°C.

In this way, the thermal CVD (chemical vapor deposition at 600°C or more) and carbonization are preferably performed to form the carbon film. The time for these processes is determined properly according to the relation with the amount of carbon. These processes may cause the particles to aggregate. These aggregating particles are preferably pulverized, for example, with a ball mill. Alternatively, the thermal CVD is repeated in the same manner depending on the circumstances.

In the method I, it is necessary to properly determine the temperature of the chemical vapor deposition and the heat treatment, the processing time, the type of raw material to generate the organic gas, and the concentration of an organic gas. The time for the heat treatment is normally selected from the range from 0.5 to 12 hours, preferably from 1 to 8 hours, particularly from 2 to 6 hours. This heat treatment time is also related to the heat treatment temperature; for example, when the heat treatment temperature is 900°C, the heat treatment is preferably performed for at least 3 hours or more.

In the method II, the heat treatment time (the time for the CVD) is normally selected from the range from 0.5 to 12 hours, particularly from 1 to 6 hours if this heat treatment is performed under an atmosphere containing an organic gas and/or vapor. It is to be noted that the time for the heat treatment previously performed on the silicon oxide of $SiO_x$ can be normally 0.5 to 6 hours, particularly 0.5 to 3 hours.

In the method III, the time (the time for the CVD) for the heat treatment previously performed on the silicon composite powder under an atmosphere containing an organic gas and/or vapor can be normally 0.5 to 12 hours, particularly 1 to 6 hours. The time for the heat treatment under an inert gas atmosphere can be normally 0.5 to 6 hours, particularly 0.5 to 3 hours.

In the method IV, the time for the carbonization previously performed on the silicon composite powder can be normally 0.5 to 12 hours, particularly 1 to 6 hours. The time for the heat treatment under an inert gas atmosphere can be normally 0.5 to 6 hours, particularly 0.5 to 3 hours.

The organic material used as the raw material to generate an organic gas in the invention is selected from materials capable of producing carbon (graphite) by pyrolysis at the above heat treatment temperature particularly under a non-oxidizing atmosphere. Examples of such organic materials include aliphatic or alicyclic hydrocarbon, such as methane, ethane, ethylene, acetylene, propane, butane, butene, pentane, isobutane, hexane, and a mixture thereof, and monocyclic to tricyclic aromatic hydrocarbons, such as benzene, toluene, xylene, styrene, ethylbenzene, diphenylmethane, naphthalene, phenol, cresol, nitrobenzene, chlorobenzene, indene, cumarone, pyridine, anthracene, phenanthrene, and a mixture thereof. In addition to these, gas light oils, creosote oils, anthracene oils, naphtha-cracked tar oils that are produced in the tar distillation process can be used alone or as a mixture. The carbon source used for the carbonization can be various organic substances: carbohydrate such as sucrose, various kinds of hydrocarbon such as acrylonitrile and pitch, or a derivative thereof, as well known examples.

At least one of the thermal CVD (the thermal chemical vapor deposition), the heat treatment, and the carbonization may be performed with a reactor having a heater is used under a non-oxidizing atmosphere, although these processes are not particularly limited. These processes can be performed, for example, continuously or in a batch manner. More specifically, a fluidized bed reactor, a rotary furnace, a vertical moving bed reactor, a tunnel furnace, a batch furnace, a rotary kiln, and so on may be selected properly depending on the purpose. A gas used in this heat treatment can be the above organic gas or a mixed gas of the organic gas and a non-oxidizing gas such as Ar, He, $H_2$, or $N_2$.

In this case, a preferable reactor has a rotatable furnace tube of the rotary furnace or rotary kiln etc., that is horizontally provided. Use of this reactor to perform the chemical vapor deposition while moving the silicon oxide particles enables stable production without causing these silicon oxide particles to aggregate. The rotational speed of the furnace tube is preferably 0.5 to 30 rpm, particularly 1 to 10 rpm. It is to be noted that this reactor is not particularly limited, provided the reactor has the furnace tube capable of maintaining the atmosphere, a rotating mechanism to rotate the furnace tube, and a heater to increase and maintain the temperature. Depending on the purpose, the reactor may be provided with a mechanism to supply a raw material (e.g., a feeder), a mechanism to collect goods (e.g., a hopper), or the furnace tube may be inclined or provided with a baffle plate to control the residence time of the raw material. The material of the furnace tube is not particularly limited, and may be selected properly from the group of ceramic such as silicon carbide, alumina, mullite, and silicon nitride, a metal having a high melting point such as molybdenum and tungsten, stainless steel (SUS), and quartz, depending on the conditions or purpose of the processes.

When the linear velocity u (m/sec) of fluidizing gas is within the range satisfying $1.5 \leq u/u_{mf} \leq 5$, where $u_{mf}$ is the velocity at the beginning of the fluidization, the conductive coating can be more efficiently formed. When $u/u_{mf}$ is 1.5 or more, the fluidization is satisfactory, and the conductive coating is prevented from having variation. When $u/u_{mf}$ is 5 or less, secondary aggregation of particles is prevented from occurring, resulting in the formation of a uniform conductive coating. It is to be noted that the velocity at the beginning of the fluidization varies depending on the size of particles, a processing temperature, a processing atmosphere, and so on. This velocity at the beginning of the fluidization can be defined as the value of the linear velocity of fluidizing gas when powder pressure loss becomes W/A where W is the weight of powder and A is the cross sectional area of a fluidization layer as the fluidizing gas (linear velocity) is gradually increased. It is to be noted that $u_{mf}$ can be normally 0.1 to 30 cm/sec, preferably 0.5 to 10 cm/sec. The particle diameter that provides these values of $u_{mf}$ is preferably 0.5 to 100 $\mu$m, more preferably 5 to 50 $\mu$m. When the particle diameter is 0.5 $\mu$m or more, the occurrence of the secondary aggregation can be prevented, and the surface of each particle can be effectively treated.

Use of powder of the obtained silicon composite powder or conductive silicon composite powder doped with lithium allows the produced negative electrode active material to inhibit the degradation of the first capacity efficiency and the capacity at the initial charging and discharging cycle (i.e., decreasing rate of the initial capacity).

One exemplary method is to mix the silicon composite powder or conductive silicon composite powder with lithium hydride, lithium aluminum hydride, or lithium alloy and then heat the resultant. Another exemplary method is to add the silicon composite powder or conductive silicon composite powder and lithium metal into a solvent, mix the resultant, and then pre-dope this mixture with lithium by performing a heat treatment to form lithium silicate.

When the silicon composite powder or conductive silicon composite powder and lithium metal are added into a solvent and the resultant is mixed, the solvent can be selected from the group consisting of carbonates, lactones, sulfolanes, ether, hydrocarbon, and a mixture thereof that do not react with lithium metal and a lithium-doped material. Use of such a solvent can more effectively prevent electrical storage devices such as batteries or capacitors produced with the produced negative electrode material doped with lithium from being affected by the decomposition when the devices are charged or discharged.

The solvent can be configured such that the solvent does not react with lithium metal and a lithium-doped material and has a boiling point of 65°C or more. The solvent having a boiling point of 65°C or more can more effectively prevent the difficulty in uniformly mixing lithium metal due to the evaporation of the solvent when mixed.

A turning peripheral speed kneader can be used for the above mixing process. The turning peripheral speed kneader can also be used after the process of mixing the material with the solvent in which lithium metal has been added. In this manner, use of the turning peripheral speed kneader enables an efficient mixing process. In view of the rate of lithium pre-doping and the productivity, lithium metal having a thickness of 0.1 mm or more is preferably used.

The heat treatment can be performed at temperatures ranging from 200 to 1,000°C. This temperature is preferably 200°C or more to efficiently undergo a chemical change from active lithium to stable lithium silicate. When this temperature is 1,000°C or less, preferably 900°C or less, the ratio B/A satisfies the above definition, and the degradation of the cycle performance can be more effectively prevented.

A method of producing a non-aqueous electrolyte secondary battery according to the invention will now be described, but the invention is not limited to this method. The inventive method produces a non-aqueous electrolyte secondary battery including a negative electrode and a positive electrode that are capable of occluding and emitting lithium ions and an electrolyte having lithium ionic conductivity. This negative electrode is produced by the inventive method of producing a negative electrode for use in a non-aqueous electrolyte secondary battery.

A silicon-contained material according to the invention can be used as a negative electrode material (a negative electrode active material) to produce a non-aqueous electrolyte secondary battery, particularly a lithium-ion secondary battery, having a high capacity and an excellent cycle performance.

EXAMPLES

The present invention will be more specifically described below with reference to examples and comparative examples, but the invention is not limited to these examples. It is to be noted that the symbol "%" described below represents mass%.

(Example 1)

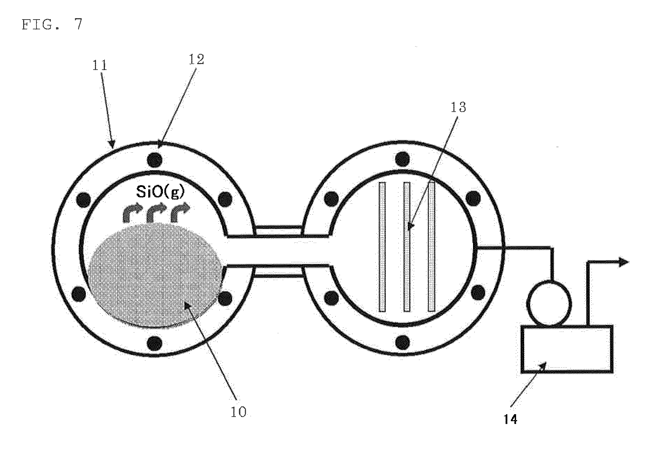

A reactor as shown in FIG. 7 was used. This reactor included a furnace 11, a heater 12, stainless steel bases 13 for precipitation, and a vacuum pump 14. Raw material powder 10 was introduced into the furnace 11. Specifically, fumed silica having an average particle size of 0.05 $\mu$m, as silicon dioxide powder, and metallic silicon having an average particle size of 5 $\mu$m pulverized with a jet mill, as metallic silicon powder, were mixed in a metallic silicon powder-to-silicon dioxide powder mole ratio of 1.01. The obtained mixed powder was placed in the furnace 11 and heated at 1,420°C under a reduced pressure of 40 Pa to generate silicon monoxide gas. The generated silicon monoxide gas was precipitated on the stainless steel bases 13, so that a silicon oxide lump was obtained. The obtained silicon oxide was pulverized with a ball mill, so that silicon oxide powder ($SiO_x$ where x=1.02) having an average particle size of 5 $\mu$m, and a BET specific surface area of 4.8 $m^2$/g. After 200 g of the obtained silicon oxide powder was set on a silicon nitride tray, this powder was left in a furnace that can maintain the atmosphere. Then, argon gas was introduced into the furnace to replace the interior of the furnace with an argon atmosphere. The temperature in the furnace was increased at a heating rate of 300°C per hour while the argon gas was continued to be introduced at a rate of 2 NL/min. The temperature was maintained within the range from 600°C to 1,000°C for 3 to 10 hours. After the maintenance, the temperature was decreased until the temperature reached room temperature. The powder was then taken out.

[Battery evaluation]

The obtained silicon-contained material was used to evaluate a battery in the following manner.

First, 75% of the obtained silicon-contained material, 5% of acetylene black, 5% of carbon nanotube, and 15% of polyimide were mixed together with a dispersing agent of N-methylpyrrolidone to form a slurry. The slurry was then applied to 15-$\mu$m-thickness copper foil. This sheet after the application was pre-dried at 80°C under a vacuum for 30 minutes, and then pressed with a roller press. The resultant was dried under a vacuum at 400°C for 2 hours and finally die-cut into a 2-$cm^2$ working electrode. Metallic lithium having a thickness of 0.2 mm was die-cut into a 2-$cm^2$ counter electrode. Then, an evaluation lithium-ion secondary battery was produced by using the obtained working electrode, the counter electrode, a reference electrode made of metallic lithium, a non-aqueous electrolyte composed of a mixed solution having an ethylene carbonate-to-1,2-dimethoxyethane volume ratio of 1:1 and 1 mole/L of lithium hexafluorophosphate dissolved in the solution, and a 30-$\mu$m-thickness separator made of a polyethylene microporous film.

The produced lithium-ion secondary battery was left at room temperature a night, and then charged with a constant current of 1.9 mA (0.95 mA/$cm^2$) until the voltage of the negative electrode with respect to the reference electrode reached 5 mV by using a secondary battery charging and discharging tester. After this voltage reached 5 mV, the charging was continued while the current was decreased such that the cell voltage kept 5 mV. When the current was decreased to less than 0.2 mA, the charging was terminated. The battery was then discharged with a constant current of 0.6 mA (0.3 mA/$cm^2$). When the voltage exceeded 2,000 mV, the discharging was terminated. The obtained discharge curve was used to create a graph therefrom where the vertical axis was a derivative dQ/dV of a discharge capacity with respect to the electric potential of the working electrode on the basis of the reference electrode, and the horizontal axis was this electric potential of the working electrode. This graph is shown in FIG. 1. From this graph, the maximum value A of the derivative dQ/dV with respect to the potential range from 260 mV to 320 mV and maximum value B of the derivative dQ/dV with respect to the potential range from 420 mV to 520 mV were obtained to calculate the ratio B/A. It is to be noted that the battery capacity in FIG. 1 was plotted after conversion into a battery capacity per gram of the silicon-contained material. Tables 1 shows the pressure (Pa) and temperature (°C) of the reactor, the temperature of the heat treatment (°C), and the value of B/A in samples 1 to 3.

[Table 1]

| sample No | pressure of reactor (P a) | temperature of reactor (°C) | temperature of heat treatment (°C) | B/A |
|-----------|---------------------------|------------------------------|-------------------------------------|------|
| 1 | 40 | 1420 | 600 | 0.55 |
| 2 | 40 | 1420 | 900 | 0.65 |
| 3 | 40 | 1420 | 1000 | 0.68 |

The cycle performance of the samples 1 to 3 was checked in the following procedure. An electrode was produced in the same manner as the working electrode and used as the negative electrode. A positive electrode was produced under the following conditions by using lithium cobalt oxide as a positive electrode active material. First, 95% of lithium cobalt oxide, 1.5% of acetylene black, 1% of carbon nanotube, and 2.5% of polyvinylidene fluoride were mixed together with a dispersing agent of N-methylpyrrolidone to form a slurry. The slurry was applied to 15-$\mu$m-thickness aluminum foil. This sheet after the application was pre-dried at 85°C in the atmosphere for 10 minutes, and then pressed with a roller press. The resultant was dried under a vacuum at 130°C for 5 hours and finally die-cut into a 2-cm$^2$ positive electrode. Then, an evaluation lithium-ion secondary battery was produced by using the obtained negative electrode and positive electrode, a non-aqueous electrolyte composed of a mixed solution having an ethylene carbonate-to-1,2-dimethoxyethane volume ratio of 1:1 and 1 mole/L of lithium hexafluorophosphate dissolved in the solution, and a 30-$\mu$m-thickness separator made of a polyethylene microporous film.

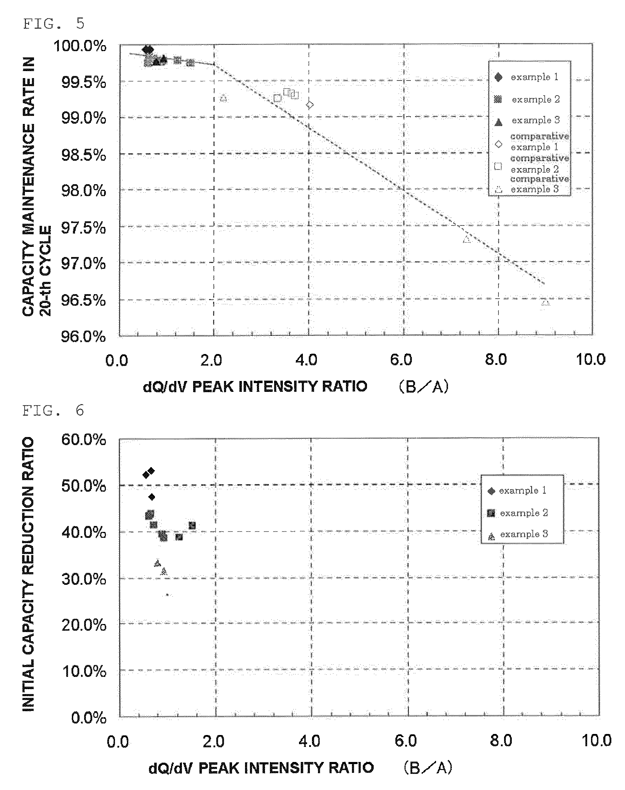

The produced lithium-ion secondary battery was left at room temperature a night, and then charged with a constant current of 2.5 mA until the voltage of the test cell reached 4.2 V by using a secondary battery charging and discharging tester (made by NAGANO K.K). After this voltage reached 4.2 V, the charging was continued while the current was decreased such that the voltage of the test cell kept 4.2 V. When the current was decreased to less than 0.5 mA, the charging was terminated. The battery was then discharged with a constant current of 2.5 mA. When the voltage exceeded 2.5V, the discharging was terminated to measure the discharging capacity. This charging and discharging test of the evaluation lithium-ion secondary battery was repeated more than 20 cycles. FIG. 4 is a diagram showing the relationship between the number of charge and discharge cycles and the discharging capacity maintenance rate. As shown in FIG. 4, the capacity maintenance rate greatly varied at the beginning of charge or discharge, but tended to stabilize after the charge and discharge were repeated about 20 times. When a battery is used for an actual automobile, the battery characteristics after the stabilization is more important than those at the beginning of charge and discharge. Because the capacity maintenance rate stabilized in the 20-th cycle, the capacity maintenance rate in that cycle was calculated by the expression below and evaluated. As shown in Table 2 below, it was found from the result that the capacity maintenance rate of samples 1 to 3 in the 20-th cycle was an excellent value ranging from 99.81% to 99.94%. FIG. 5 shows the relationship between the intensity ratio B/A of dQ/dV and the capacity maintenance rate in the 20-th cycle, in which the value of the capacity maintenance rate was plotted with respect to the intensity ratio B/A of dQ/dV in examples 1 to 3 and comparative examples 1 to 3. The value at each measurement point was plotted in FIG. 5.

```
Capacity maintenance rate in 20-th cycle [%] =
Discharge capacity in 21-th cycle/Discharge capacity in
20-th cycle × 100
```

[Table 2]

| sample No | pressure of reactor (P a) | temperature of reactor (°C) | temperature of heat treatment (°C) | B/A | capacity maintenance rate (20-th cycle) [%] |
|-----------|---------------------------|------------------------------|-------------------------------------|------|----------------------------------------------|
| 1 | 40 | 1420 | 600 | 0.55 | 99.93 |
| 2 | 40 | 1420 | 900 | 0.65 | 99.94 |
| 3 | 40 | 1420 | 1000 | 0.68 | 99.81 |

(Example 2)

After 200 g of the same silicon oxide powder as example 1 was set on a silicon nitride tray, this powder was left in a furnace that can maintain the atmosphere; the powder was $SiO_x$ having an average particle size of 5 $\mu$m, and a BET specific surface area of 4.8 $m^2$/g where x=1.02. Then, argon gas was introduced into the furnace to replace the interior of the furnace with an argon atmosphere. The temperature in the furnace was increased at a heating rate of 300°C per hour while a mixed gas of methane and argon was introduced at a rate of 2 NL/min. The temperature was maintained within the range from 600°C to 1,000°C for 3 to 10 hours, so as to perform thermal chemical vapor deposition (CVD) for a carbon coating. After the maintenance, the temperature was decreased until the temperature reached room temperature. The powder was then taken out. The amount of the deposited carbon of the obtained conductive silicon composite powder was in the range from 5.3% to 18.5%.

[Battery evaluation]

The battery with the obtained conductive silicon composite powder was evaluated in the same manner as example 1 to calculate the capacity maintenance rate in the 20-th cycle. As shown in Table 3 below, it was found from the result that the value of B/A of samples 4 to 10 was in the range from 0.61 to 1.52, and the capacity maintenance rate thereof was an excellent value ranging from 99.73% to 99.81%. The value at each measurement point was plotted in FIG. 5.

[Table 3]

| sample No | pressure of reactor (Pa) | temperature of reactor (°C) | temperature of heat treatment (°C) | B/A | capacity maintenance rate (20-th cycle) [%] |
|---|---|---|---|---|---|
| 4 | 40 | 1420 | 1100 | 1.24 | 99.78 |
| 5 | 40 | 1420 | 1100 | 0.90 | 99.76 |
| 6 | 40 | 1420 | 1000 | 0.72 | 99.80 |
| 7 | 40 | 1420 | 1100 | 0.93 | 99.77 |
| 8 | 40 | 1420 | 900 | 0.61 | 99.74 |
| 9 | 40 | 1420 | 1150 | 1.52 | 99.73 |
| 10 | 40 | 1420 | 1000 | 0.65 | 99.81 |

(Example 3)

The silicon-contained material in examples 1 and 2 was made of silicon oxide powder, subjected to the heat treatment and coated with carbon. Whether a high cycle performance effect of the invention can be achieved was checked even when another element was added was checked. In production of a battery, conductive silicon composite powder that was doped with lithium in advance was produced. Lithium may be used to improve the first efficiency. Specifically, the conductive silicon composite powder (sample 10) having a B/A value of 0.65 obtained in example 2 and 5% of metallic lithium were added to an organic solvent and the resultant was mixed. The mixture was then dried. This obtained conductive silicon composite powder doped with lithium was heated at a heating rate of 300°C/hour under an argon gas atmosphere and the temperature was maintained within the range from 500°C to 800°C for 3 to 8 hours.

[Battery evaluation]

The battery with the obtained conductive silicon composite powder was evaluated in the same manner as example 1 to calculate the capacity maintenance rate in the 20-th cycle. As shown in Table 4 below, it was found from the result that the value of B/A of samples 11 and 12 was in the range from 0.79 to 0.93, and the capacity maintenance rate thereof was an excellent value ranging from 99.76% to 99.81%. The value at each measurement point was plotted in FIG. 5.

[Table 4]

| sample No | pressure of reactor (Pa) | temperature of reactor (°C) | temperature of heat treatment (°C) | B/A | capacity maintenance rate (20-th cycle) [%] |
|---|---|---|---|---|---|
| 11 | 40 | 1420 | 500 | 0.79 | 99.76 |
| 12 | 40 | 1420 | 800 | 0.93 | 99.81 |

(Comparative example 1)

Fumed silica having an average particle size of 0.05 μm, as silicon dioxide powder, and metallic silicon having an average particle size of 5 μm pulverized with a jet mill, as metallic silicon powder, were mixed in a metallic silicon powder-to-silicon dioxide powder mole ratio of 1.01. The obtained mixed powder was placed in the furnace 11 and heated at 1,420°C under a reduced pressure of 90 Pa to generate silicon monoxide gas. The generated silicon monoxide gas was precipitated on the stainless steel bases 13, so that a silicon oxide lump was obtained. The obtained silicon oxide was pulverized with a ball mill, so that silicon oxide powder (SiO$_x$ where x=1.02) having an average particle size of 5 μm, and a BET specific surface area of 4.2 m$^2$/g.

After 200 g of the obtained silicon oxide powder was set on a silicon nitride tray, this powder was left in a furnace that can maintain the atmosphere. Then, argon gas was introduced into the furnace to replace the interior of the furnace with an argon atmosphere. The temperature in the furnace was increased at a heating rate of 300°C per hour while the argon gas was continued to be introduced at a rate of 2 NL/min. The temperature was maintained at 1,250°C for 3 hours. After the maintenance, the temperature was decreased until the temperature reached room temperature. The powder was then taken out.

[Battery evaluation]

The battery with the obtained silicon-contained material was evaluated in the same manner as example 1 to calculate the capacity maintenance rate in the 20-th cycle. As shown in Table 5 below, it was found from the result that the value of B/A of sample 13 was 4.02, and the capacity maintenance rate thereof was 99.16%. This value was about 0.5 lower than the values in examples 1 to 3. The value at each measurement point was plotted in FIG. 5.

[Table 5]

| sample No | pressure of reactor (Pa) | temperature of reactor (°C) | temperature of heat treatment (°C) | B / A | capacity maintenance rate (20-th cycle) [%] |
|---|---|---|---|---|---|
| 13 | 90 | 1420 | 1250 | 4.02 | 99.16 |

(Comparative example 2)

After 200 g of the same silicon oxide powder as comparative example 1 was set on a silicon nitride tray, this powder was left in a furnace that can maintain the atmosphere; the powder was SiO$_x$ having an average particle size of 5 μm, and a BET specific surface area of 4.2 m$^2$/g where x=1.02. Then, argon gas was introduced into the furnace to replace the interior of the furnace with an argon atmosphere. The temperature in the furnace was increased at a heating rate of 300°C per hour while a mixed gas of methane and argon was introduced at a rate of 2 NL/min. The temperature was maintained at 1,250°C for 2 to 3 hours, so as to perform thermal CVD. After the maintenance, the temperature was decreased until the temperature reached room temperature. The powder was then taken out. The amount of the deposited carbon of the obtained conductive silicon composite powder was in the range from 15.0% to 19%.

[Battery evaluation]

The battery with the obtained conductive silicon composite powder was evaluated in the same manner as example 1 to calculate the capacity maintenance rate in the 20-th cycle. As shown in Table 6 below, it was found from the result that the value of B/A of samples 14 to 17 was in the range from 3.34 to 3.71, and the capacity maintenance rate thereof was in the range from 99.25% to 99.33%. This value was about 0.5 lower than the values in examples 1 to 3. The value at each measurement point was plotted in FIG. 5.

[Table 6]

| sample No | pressure of reactor (Pa) | temperature of reactor (°C) | temperature of heat treatment (°C) | B / A | capacity maintenance rate (20-th cycle) [%] |
|---|---|---|---|---|---|
| 14 | 90 | 1420 | 1250 | 8.34 | 99.25 |
| 15 | 90 | 1420 | 1250 | 8.71 | 99.29 |
| 16 | 90 | 1420 | 1250 | 3.54 | 99.33 |
| 17 | 90 | 1420 | 1250 | 3.64 | 99.31 |

(Comparative example 3)

After 200 g of the same silicon oxide powder as comparative example 1 was set on a silicon nitride tray, this powder was left in a furnace that maintained the atmosphere; the powder was $SiO_x$ having an average particle size of 5 $\mu$m, and a BET specific surface area of 4.2 m$^2$/g where x=1.02. Then, argon gas was introduced into the furnace to replace the interior of the furnace with an argon atmosphere. The temperature in the furnace was increased at a heating rate of 300°C per hour while a mixed gas of methane and argon was introduced at a rate of 2 NL/min. The temperature was maintained at 1,000°C for 10 hours, so as to perform thermal CVD for a carbon film. After the maintenance, the temperature was decreased until the temperature reached room temperature. The powder was then taken out. The amount of the deposited carbon of the obtained conductive silicon composite powder was 5.3%. The obtained conductive silicon composite powder and 10% of metallic lithium were added to an organic solvent and the resultant was mixed. The mixture was then dried. This obtained conductive silicon composite powder doped with lithium was heated at a heating rate of 300°C/hour under an argon gas atmosphere and the temperature was maintained within the range from 400°C to 800°C for 2 to 12 hours. The battery with the obtained conductive silicon composite powder doped with lithium was evaluated.

[Battery evaluation]

The battery with the obtained conductive silicon composite powder was evaluated in the same manner as example 1 to calculate the capacity maintenance rate in the 20-th cycle. As shown in Table 7 below, it was found from the result that the value of B/A of samples 18 to 20 was in the range from 2.20 to 9.00, and the capacity maintenance rate thereof was in the range from 96.45% to 99.32%. This value was about 0.5 lower than the values in examples 1 to 3. The value at each measurement point was plotted in FIG. 5.

[Table 7]

| sample No | pressure of reactor (Pa) | temperature of reactor (°C) | temperature of heat treatment (°C) | B / A | capacity maintenance rate (20-th cycle) [%] |
|---|---|---|---|---|---|
| 18 | 90 | 1420 | 500 | 9.00 | 96.45 |
| 19 | 90 | 1420 | 450 | 2.20 | 99.26 |
| 20 | 90 | 1420 | 400 | 7.33 | 97.32 |

[Verification of effect by drawings]

FIG. 5 summarizes the result of the relationship between the value of B/A which is the intensity ratio of dQ/dV and the capacity maintenance rate in the 20-th cycle in examples 1 to 3 and comparative examples 1 to 3. In this figure, it can be clearly seen that when the value of B/A is 2 or less, the capacity maintenance rate was in an excellent range. This result indicates that a silicon-contained material for use in a non-aqueous electrolyte secondary battery having good cycle performance, an electrode and non-aqueous electrolyte secondary battery produced by using this material can be provided if the value of B/A is properly controlled without being affected by the composition of the silicon-contained material and the presence of a conductive coating.

In other words, a non-aqueous electrolyte secondary battery having good cycle performance can reliably be produced in a manner that a silicon-contained material exhibiting a B/A value of 2 or less is selected and used as the active material when a negative electrode is produced in the production of the non-aqueous electrolyte secondary battery.

Then, reductions in capacity that occurred within the period from the beginning to the 20-th cycle of charge and discharge cycles were compared as an initial capacity reduction ratio. FIG. 6 draws a comparison between the intensity ratio B/A of dQ/dV and the initial capacity reduction ratio in examples 1 to 3. As shown in FIG. 6, examples 2 and 3 exhibited a smaller initial capacity reduction ratio than example 1 and provided a higher performance negative electrode material for use in a non-aqueous electrolyte secondary battery and a higher performance non-aqueous electrolyte secondary battery. It can be understood that example 2 achieved this effect by the carbon coating; example 3 by the combination of the carbon coating and lithium doping.

It is to be noted that the present invention is not limited to the foregoing embodiment. The embodiment is just an exemplification, and any examples that have substantially the same feature and demonstrate the same functions and effects as those in the technical concept described in claims of the present invention are included in the technical scope of the present invention.

**Claims**

1. A silicon-contained material capable of being doped with lithium and de-doped, wherein
   when a three-electrode cell produced by using a working electrode including the silicon-contained material as an active material, a reference electrode made of metallic lithium, a counter electrode made of metallic lithium, and an electrolyte having lithium ionic conductivity is charged and discharged to graph a relationship between a derivative dQ/dV of a charging or discharging capacity Q with respect to an electric potential V of the working electrode on the basis of the reference electrode and the electric potential V, a ratio B/A is 2 or less while current flows in a direction in which the lithium of the silicon-contained material is de-doped in the discharge, where A is the maximum value of the derivative dQ/dV with respect to a potential range from 260 mV to 320 mV, and B is the maximum value of the derivative dQ/dV with respect to a potential range from 420 mV to 520 mV.

2. The silicon-contained material according to claim 1, wherein the silicon-contained material is a silicon composite configured such that silicon fine crystals or silicon fine particles are dispersed in a substance having a different composition from a composition of the silicon fine crystals or the silicon fine particles.

3. The silicon-contained material according to claim 2, wherein the silicon composite is a silicon oxide expressed by a general formula of $SiO_x$ (where $0.9 \leq x < 1.6$).

4. The silicon-contained material according to claim 2 or claim 3, wherein the substance having the different composition from the composition of the silicon fine crystals or the silicon fine particles is a silicon-based compound.

5. The silicon-contained material according to claim 4, wherein the silicon-based compound is silicon dioxide.

6. The silicon-contained material according to any one of claims 1 to 5, comprising a conductive coating.

7. The silicon-contained material according to claim 6, wherein the conductive coating is mainly made of carbon.

8. The silicon-contained material according to any one of claims 1 to 7, further comprising lithium.

9. A negative electrode for use in a non-aqueous electrolyte secondary battery, comprising a silicon-contained material according to any one of claims 1 to 8 used as a negative electrode active material.

10. A negative electrode for use in a non-aqueous electrolyte secondary battery, comprising a silicon-contained material according to any one of claims 1 to 8 and carbon used as a negative electrode active material.

11. A non-aqueous electrolyte secondary battery, comprising a negative electrode and a positive electrode that are capable of occluding and emitting lithium ions and an electrolyte having lithium ionic conductivity, wherein the negative electrode is a negative electrode for use in a non-aqueous electrolyte secondary battery according to claim 9 or claim 10.

12. A method of producing a negative electrode for use in a non-aqueous electrolyte secondary battery by using a silicon-contained material capable of being doped with lithium and de-doped as a negative electrode active material, comprising:

selecting the silicon-contained material such that when a three-electrode cell produced by using a working electrode including the silicon-contained material as an active material, a reference electrode made of metallic lithium, a counter electrode made of metallic lithium, and an electrolyte having lithium ionic conductivity is charged and discharged to graph a relationship between a derivative dQ/dV of a charging or discharging capacity Q with respect to an electric potential V of the working electrode on the basis of the reference electrode and the electric potential V, a ratio B/A is 2 or less while current flows in a direction in which the lithium of the silicon-contained material is de-doped in the discharge, where A is the maximum value of the derivative dQ/dV with respect to a potential range from 260 mV to 320 mV, and B is the maximum value of the derivative dQ/dV with respect to a potential range from 420 mV to 520 mV; and

producing the negative electrode for use in a non-aqueous electrolyte secondary battery by using the selected silicon-contained material as the negative electrode active material.

13. A method of producing a non-aqueous electrolyte secondary battery including a negative electrode and a positive electrode that are capable of occluding and emitting lithium ions and an electrolyte having lithium ionic conductivity, wherein the negative electrode is a negative electrode produced by the method according to claim 12.

FIG. 1

FIG. 2

FIG. 3

FIG. 4

FIG. 5

FIG. 6

FIG. 7

## INTERNATIONAL SEARCH REPORT

International application No.

PCT/JP2014/002388

A. CLASSIFICATION OF SUBJECT MATTER
*H01M4/48*(2010.01)i, *C01B33/113*(2006.01)i, *H01M4/131*(2010.01)i, *H01M4/36*
(2006.01)i

According to International Patent Classification (IPC) or to both national classification and IPC

B. FIELDS SEARCHED

Minimum documentation searched (classification system followed by classification symbols)
H01M4/48, C01B33/113, H01M4/131, H01M4/36

Documentation searched other than minimum documentation to the extent that such documents are included in the fields searched
Jitsuyo Shinan Koho        1922–1996    Jitsuyo Shinan Toroku Koho   1996–2014
Kokai Jitsuyo Shinan Koho  1971–2014    Toroku Jitsuyo Shinan Koho   1994–2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2013/042421 A1  (NEC Corp.),<br>28 March 2013 (28.03.2013),<br>paragraphs [0015] to [0017], [0025] to [0028],<br>[0037], [0043], [0050] to [0051]; fig. 1 to 7<br>(Family: none) | 1,8–13<br>2–7 |
| X<br>Y | WO 2012/017824 A1  (NEC Energy Devices, Ltd.),<br>09 February 2012 (09.02.2012),<br>paragraphs [0019] to [0020], [0026] to [0031],<br>[0055] to [0057]; fig. 2<br>& JP 2012-54220 A        & US 2013/0119940 A1<br>& CN 103053066 A | 1,8–13<br>2–7 |
| Y | JP 2013-8696 A  (Shin-Etsu Chemical Co., Ltd.),<br>10 January 2013 (10.01.2013),<br>paragraphs [0008] to [0011], [0014], [0027]<br>(Family: none) | 2–7 |

☒ Further documents are listed in the continuation of Box C.          ☐ See patent family annex.

| | |
|---|---|
| * Special categories of cited documents:<br>"A" document defining the general state of the art which is not considered    to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    30 June, 2014 (30.06.14) | Date of mailing of the international search report<br>    08 July, 2014 (08.07.14) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| | International application No. |
|---|---|
| | PCT/JP2014/002388 |

C (Continuation). DOCUMENTS CONSIDERED TO BE RELEVANT

| Category* | Citation of document, with indication, where appropriate, of the relevant passages | Relevant to claim No. |
|---|---|---|
| A | WO 2012/165049 A1 (NEC Corp.),<br>06 December 2012 (06.12.2012),<br>entire text; all drawings<br>(Family: none) | 1-13 |
| A | JP 2004-63433 A (Shin-Etsu Chemical Co., Ltd.),<br>26 February 2004 (26.02.2004),<br>entire text; all drawings<br>& US 2003/0118905 A1 & EP 1323783 A2<br>& DE 60236401 D & TW 593141 B<br>& CN 1428880 A & KR 10-0812302 B1 | 1-13 |
| A | WO 2011/036760 A1 (Toyota Motor Corp.),<br>31 March 2011 (31.03.2011),<br>entire text; all drawings<br>& US 2012/0169288 A1 & CN 102369627 A | 1-13 |
| A | JP 2003-7342 A (Hitachi Maxell, Ltd.),<br>10 January 2003 (10.01.2003),<br>entire text; all drawings<br>(Family: none) | 1-13 |
| E,A | WO 2014/080608 A1 (Toyota Industries Corp.),<br>30 May 2014 (30.05.2014),<br>entire text; all drawings<br>(Family: none) | 1-13 |
| E,A | JP 2014-116308 A (Samsung Fine Chemicals Co., Ltd.),<br>26 June 2014 (26.06.2014),<br>entire text; all drawings<br>(Family: none) | 1-13 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05174818 B
- JP H0660867 B
- JP H10294112 B
- JP 2997741 B
- JP H11102705 B
- JP 3952180 B
- JP 4081676 B